Europäisches Patentamt

**European Patent Office**

Office européen des brevets

(11) Numéro de publication: **0 044 095**
**A1**

(12) # DEMANDE DE BREVET EUROPEEN

(21) Numéro de dépôt: **81200654.2**

(22) Date de dépôt: **12.06.81**

(51) Int. Cl.³: **C 21 B 5/00**
**B 65 G 53/46, F 23 K 3/02**

(30) Priorité: **14.07.80 LU 82624**

(43) Date de publication de la demande:
**20.01.82 Bulletin 82/3**

(84) Etats contractants désignés:
**AT BE DE FR GB IT NL**

(71) Demandeur: **PAUL WURTH S.A.**
**32 rue d'Alsace**
**L-1122 Luxembourg(LU)**

(72) Inventeur: **Ulveling, Léon**
**rue Dr. Jos Peffer**
**Howald(LU)**

(72) Inventeur: **Thillen, Guy**
**20 rue du Palais**
**Diekirch(LU)**

(72) Inventeur: **Mailliet, Pierre**
**1 allée Drosbach**
**Howald(LU)**

(72) Inventeur: **Schmit, Charles**
**14 rue des Champs**
**Aspelt(LU)**

(74) Mandataire: **Meyers, Ernest et al,**
**c/o FREYLINGER & ASSOCIES Postfach 1153, 46 rue du**
**Cimetière**
**Luxemburg(LU)**

(54) **Procédé et installation de formation d'un courant pneumatique uniforme de matières pulvérulentes et application à l'injection de combustibles solides dans un four à cuve.**

(57) La matière pulvérulente est admise dans un jet d'air de propulsion sous pression, à l'aide d'un sas à rotor alvéolaire.
Pour éviter des pulsations dans les conduites, on prévoit une enceinte (6) disposée immédiatement en-dessous du sas à rotor alévolaire (2) et recevant la matière pulvérulente au fur et à mesure qu'elle est débitée par celui-ci, cette enceinte (6) comprenant une cuve cylindrique (8) pourvue d'une conduite tangentielle (12) d'admission du fluide de propulsion pneumatique.

./...

Procédé et installation de formation d'un courant pneumatique uniforme de matières pulvérulentes et application à l'injection de combustibles solides dans un four à cuve

La présente invention concerne un procédé de formation d'un courant pneumatique uniforme de matières pulvérulentes qui sont dosées au moyen d'un sas à rotor alvéolaire et ensuite introduites dans un fluide de propulsion. L'invention concerne également une installation pour la mise en oeuvre de ce procédé et, à titre d'application, un procédé et une installation d'injection de combustibles solides dans un four à cuve.

La demande de brevet européen 80103206 décrit un procédé et une installation de dosage et de transport par voie pneumatique de matières solides vers une enceinte sous pression, notamment pour l'injection de combustibles solides dans un haut fourneau. D'après cette demande de brevet, chaque tuyère, ou chaque couple de tuyères, est alimentée séparément à partir d'un réservoir recevant les quantités nécessaires de poudre de charbon ou de poudre de lignite. Le transport de cette poudre entre ce réservoir et le haut fourneau est effectué par voie pneumatique et il s'est avéré que le moyen le plus sûr et le plus fiable pour prélever des quantités déterminées de matières dans ce réservoir est un sas à rotor alévolaire, bien connu en soi. Un tel sas est constitué essentiellement d'un rotor cylindrique pourvu sur sa périphérie d'un certain nombre de palettes définissant un nombre correspondant d'alvéoles. Ce rotor tourne de manière étanche à l'intérieur d'un boîtier et la matière alimentée par le dessus est entraînée par les alvéoles vers le bas dans un courant d'air sous pression servant de fluide de propulsion. Cet air de propulsion traverse le rotor au niveau des alvéoles, parallèlement à son axe de rotation et entraîne la matière au fur et à mesure qu'elle est débitée par les alvéoles, c'est-à-dire que le dosage et l'admission de la matière dans le fluide de propulsion sont réalisés à l'intérieur de ce sas.

Toutefois, dans l'application précitée, il a été constaté que les alvéoles sont vidées instantanément dès qu'elles

0044095

pénètrent dans l'air sous pression de la conduite pneumatique. Autrement dit, dès qu'une alvéole est vidée de son contenu, il existe un temps mort durant lequel la matière pulvérulente n'est pas admise dans la conduite pneumatique et qui dure jusqu'à ce que la prochaine alvéole se présente. Il en résulte que le combustible pulvérulent est injecté dans le haut fourneau par petits paquets se présentant de façon périodique suivant la vitesse de rotation du rotor. Dans l'application concernée, cette vitesse est telle que les alvéoles sectionnent le passage pneumatique à la cadence de une alvéole par seconde et le rythme d'apparition de ces paquets de combustible est également de un par seconde.

La cause de ce phénomène est le fait qu'il faut utiliser une vitesse et une pression élevées dans la conduite pneumatique. La vitesse ne peut pas être inférieure à 18 m/sec pour éviter les dépôts et empêcher les retours de flammes depuis le haut fourneau, tandis que la pression doit être supérieure à la contre-pression régnant à l'intérieur du four. Dans d'autres applications que celle visée par la présente invention, ce phénomène n'a pas de conséquence. En effet, ou bien, le phénomène n'existe pas par suite d'une pression et d'une vitesse inférieures, ou bien il existe également et alors on peut, soit l'éliminer en réduisant, par exemple la pression, soit le laisser subsister lorsqu'il s'agit simplement de transporter des produits pulvérulents car, dans ce cas, il importe peu que la matière soit propulsée de façon continue ou par petits paquets.

Par contre, dans l'application visée, c'est-à-dire l'injection de poudre de charbon ou de poudre de lignite dans un haut fourneau, il faut rappeler que cette poudre doit être brûlée dans le four et que, à cet effet, on injecte, de manière continue à travers les porte-vent, une certaine quantité d'oxygène pour l'entretien du processus de combustion. Cette quantité d'oxygène, ou d'air enrichi, est, bien entendu, calculée en fonction de la quantité de combustible, c'est-à-dire qu'on injecte la quantité nécessaire et suffisante pour brûler la quantité de combustible qu'on a l'intention d'injecter dans le four.

Or, si la lignite ou le charbon sont injectés par petits paquets, l'oxygène qui est injecté durant les temps

morts s'écoulant entre l'apparition de deux paquets n'est pas utilisé et pénètre dans la masse à l'intérieur du four. De même, lors de l'injection d'un paquet de combustible, la masse de celui-ci est trop abondante pour la quantité d'oxygène injectée et le combustible n'est pas complètement brûlé. En résumé, on peut dire qu'au total, on injecte toujours la même quantité de combustible pour laquelle la quantité d'oxygène a été calculée mais que, par le fait de l'injection pulsatoire du combustible, il y a alternativement un excès et un manque de combustible en présence d'une quantité constante d'oxygène.

Le but de la présente invention est de prévoir un nouveau procédé permettant la suppression de ce transport pulsatoire dans la voie pneuamtique, ainsi qu'une installation pour la mise en oeuvre de ce procédé.

A cet effet, le procédé selon l'invention est essentiellement caractérisé en ce que l'introduction de la matière pulvérulente dans le fluide de propulsion est réalisée hors du sas dans un mouvement tourbillonnaire qu'on impose au fluide de propulsion.

Le mouvement tourbillonnaire est imposé au fluide en le dirigeant tangentiellement dans une partie cylindrique d'une enceinte.

L'installation prévue par l'invention pour la mise en oeuvre de ce procédé comporte un sas à rotor alvéolaire destiné à débiter des quantités dosées de matière pulvérulente, caractérisée par une enceinte disposée immédiatement en-dessous du sas à rotor alvéolaire et recevant la matière pulvérulente au fur et à mesure qu'elle est débitée par celui-ci, cette enceinte comprenant une cuve cylindrique pourvue d'une conduite tangentielle d'admission d'un fluide de propulsion pneumatique.

Cette enceinte comporte une section tronconique formant la transition entre la cuve cylindrique et une conduite pneumatique quittant l'enceinte. La conicité de cette section tronconique est approximativement de $20^{\circ}$.

La présence de cette enceinte, et plus particulièrement l'effet tourbillonnaire qui s'y produit, empêche une admission instantanée du contenu des alvéoles du rotor à sas alvéolaire et supprime, de ce fait, le transport pulsatoire expliqué ci-dessus.

Le mouvement tourbillonnaire du fluide de propulsion à l'intérieur de l'enceinte provoque un mélange intense avec la matière débitée par le sas à rotor alvéolaire et le fluide de propulsion quittant cette enceinte entraîne la matière pulvérulente de manière progressive et uniforme.

Quoique le procédé et l'installation puissent être appliqués partout où le besoin s'en manifeste pour supprimer cet effet pulsatoire dans une conduite de transport pneumatique, l'invention vise, à titre d'application avantageuse, l'injection de combustibles solides dans un four à cuve.

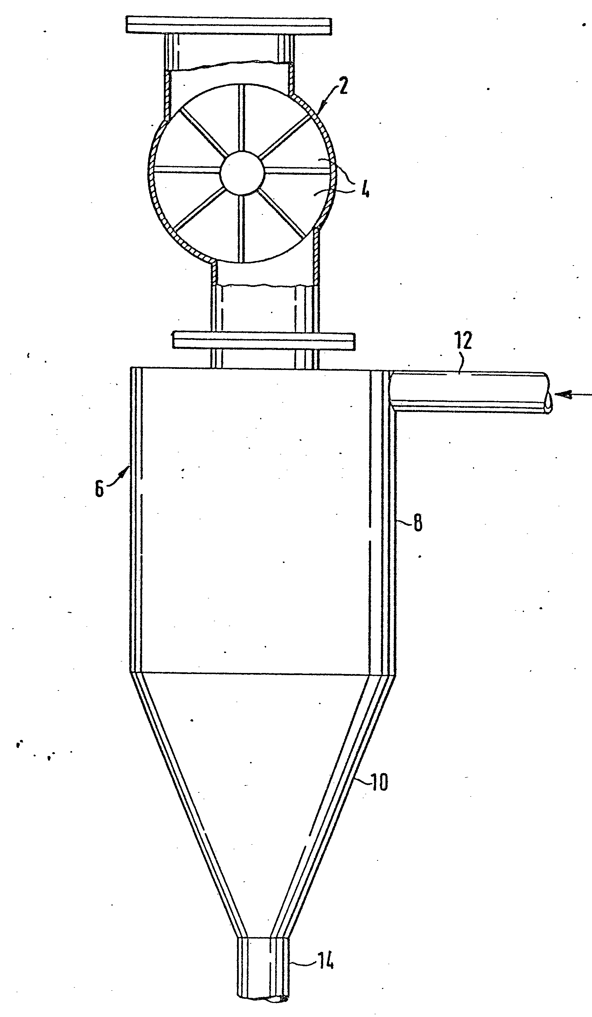

D'autres particularités et caractéristiques ressortiront de la description détaillée d'un mode de réalisation avantageux présenté ci-dessous, à titre d'illustration, en référence à la figure unique, montrant schématiquement, et partiellement en coupe, un sas à rotor alvéolaire associé à une enceinte pour la formation d'un courant pneumatique selon l'invention.

Le sas à rotor alvéolaire montré sur cette figure est désigné globalement par la référence 2. Ce sas comporte essentiellement un rotor tournant autour d'un axe perpendiculaire à la figure et pourvu à sa périphérie d'une série de palettes définissant entre elles des alvéoles 4. Au fur et à mesure de la rotation de ce rotor, ces alvéoles 4 se remplissent par le dessus et débitent leur contenu vers le bas.

Conformément à l'invention, la matière pulvérulente débitée par les alvéoles 4 est admise dans une enceinte 6 constituée par une cuve cylindrique 8 dans laquelle débouche une conduite 12 d'admission d'un fluide de propulsion pneumatique. La cuve cylindrique 8 est prolongée vers le bas par une section tronconique 10 à partir de laquelle une conduite pneumatique 14 quitte l'enceinte 6 pour entraîner la matière pulvérulente, notamment de la poudre de charbon ou de la lignite, vers les tuyères d'un haut fourneau.

La conduite pneumatique 12 doit obligatoirement pénétrer tangentiellement dans la partie supérieure de l'en-

0044095

ceinte 8 afin de provoquer un mouvement tourbillonnaire à l'intérieur de cette enceinte. C'est ce mouvement tourbillonnaire qui est à l'origine d'un mélange intense de la matière pulvérulente avec le fluide de propulsion, notamment de l'air sous pression.

Afin de favoriser une admission progressive et uniforme de la matière pulvérulente dans le fluide quittant l'enceinte par la conduite 14, il ne faut pas que la conicité de la partie tronconique 10 soit trop élevée. Une conicité idéale est de l'ordre de 20°.

0044095

REVENDICATIONS

1. - Procédé de formation d'un courant pneumatique uniforme de matières pulvérulentes qui sont dosées au moyen d'un sas à rotor alvéolaire et ensuite introduites dans un fluide de propulsion, caractérisé en ce que l'introduction de la matière pulvérulente dans le fluide de propulsion est réalisée hors du sas dans un mouvement tourbillonnaire qu'on impose au fluide de propulsion.

2. - Procédé selon la revendication 1, caractérisé en ce que le mouvement tourbillonnaire est imposé au fluide en le dirigeant tangentiellement dans une partie cylindrique d'une enceinte.

3. - Installation pour la mise en oeuvre du procédé selon les revendications 1 ou 2, comprenant un sas à rotor alvéolaire destiné à débiter des quantités dosées de matière pulvérulente, caractérisée par une enceinte (6) disposée immédiatement en-dessous du sas à rotor alvéolaire (2) et recevant la matière pulvérulente au fur et à mesure qu'elle est débitée par celui-ci, cette enceinte (6) comprenant une cuve cylindrique (8) pourvue d'une conduite tangentielle (12) d'admission d'un fluide de propulsion pneumatique.

4. - Installation selon la revendication 3, caractérisée en ce que l'enceinte (6) comporte une section tronconique (10) formant la transition entre la cuve cylindrique (8) et une conduite pneumatique (14) quittant l'enceinte.

5. - Installation selon la revendication 4, caractérisée en ce que la conicité de la section tronconique (10) est de 20°.

6. - Application du procédé selon l'une des revendications 1 ou 2 à l'injection d'un combustible solide dans un four à cuve.

7. - Application de l'installation selon l'une quelconque des revendications 3 à 5 à l'injection d'un combustible solide dans un four à cuve.

0044095

Office européen
des brevets

**RAPPORT DE RECHERCHE EUROPEENNE**

Numéro de la demande

EP 81 20 0654

| Catégorie | Citation du document avec indication. en cas de besoin. des parties pertinentes | Revendication concernée |
|---|---|---|
| | FR - A - 1 262 704 (JEAN CADARS & C.F. LUROL) | 1,3 |
| | * Figures 1-3; résumé; page 2, colonne de gauche, dernier alinéa * | |
| | -- | |
| | FR - A - 1 253 368 (SOCIETE ANO- NYME SOCAM) | 1,3 |
| | * Figures 1-3; résumé * | |
| | -- | |
| | US - A - 2 841 101 (A.B. HALE et al.) | 1,3 |
| | * Figure 1; revendication 1; colonne 3, lignes 70-75; co- lonne 4, lignes 1-7 * | |
| | -- | |
| | DE - C - 407 246 (SCHMELZ- UND RAFFINIER-WERKE) | 1,3,6, 7 |
| | * Figures 1-6; revendications 1-6 * | |
| | -- | |
| | US - A - 1 663 220 (C. SCHWARTZ) | 1,3 |
| | * Figure 1, revendications 1-4 * | |
| | -- | |
| | US - A - 3 413 039 (H. ASGEIRSSON) | 1,2,3 |
| | * Figure 1 * | |
| | -- | |
| | US - A - 2 477 414 (G.P. McBRIDE) | 1,3,4, 5 |
| | * Figure 1 * | |
| | ---- | |

**DOCUMENTS CONSIDERES COMME PERTINENTS**

**CLASSEMENT DE LA DEMANDE (Int Cl )**

C 21 B 5/00
B 65 G 53/46
F 23 K 3/02

**DOMAINES TECHNIQUES RECHERCHES (Int. Cl.³)**

C 21 B 5/00
B 65 G 53/46
53/06
53/66
53/58
53/14
53/16
F 23 K 3/02

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille. document correspondant

Le présent rapport de recherche a été établi pour toutes les revendications

| Lieu de la recherche | Date d'achèvement de la recherche | Examinateur |
|---|---|---|
| La Haye | 16-10-1981 | ELSEN |

OEB Form 1503.1  06.78